# EUROPÄISCHE PATENTANMELDUNG

(11) **EP 0 884 517 A1**
(43) Veröffentlichungstag der Anmeldung: **16.12.1998**
(21) Anmeldenummer: 98810425.3
(22) Anmeldetag: 11.05.1998
(51) Int. Cl.: F16L 17/10, F16L 21/03, F16L 37/06

(54) **Steckmuffe und Verbindung zwischen einer Steckmuffe und wenigstens einem Rohr**

(30) Priorität: 11.06.1997 CH 1415/97
(71) Anmelder: GEBERIT TECHNIK AG, CH-8645 Jona (CH)
(72) Erfinder: Wüst, Theodor, 8630 Rüti (CH)
(74) Vertreter: Groner, Manfred

(57) **Zusammenfassung**

Die Steckmuffe besitzt einen Muffenkörper (4, 18, 23), der wenigstens eine zylindrische Öffnung (5) zur Aufnahme eines Rohrendes (7a) sowie Mittel (11, 19, 24) zur reibschlüssigen Befestigung des Rohrendes (7a) am Muffenkörper (4, 18, 23) aufweist. Die genannten Mittel weisen ein Spannelement (11, 19, 24) auf, das vor dem Einstecken des Rohrendes (7a) in die zylindrische Öffnung (5) der Steckmuffe durch eine Vergrösserung seines Innendurchmessers (A) vorspannbar ist und das nach dem Einstecken des Rohrendes (7a) durch freiwerdende Eigenspannung gegen die Aussenseite (8) des Rohrendes (7a) spannbar ist. Das Spannelement (11) ist beispielsweise durch Unterdruck vorspannbar und besitzt einen ringförmigen Kanal (14) oder Hohlraum, der wenigstens teilweise evakuierbar ist.

## Beschreibung

Die Erfindung betrifft eine Steckmuffe, insbesondere für Rohre aus Kunststoff, mit einem Muffenkörper, der wenigstens eine zylindrische Öffnung zur Aufnahme eines Rohrendes sowie Mittel zur reibschlüssigen Befestigung des Rohrendes am Muffenkörper aufweist. Die Erfindung betrifft zudem eine Verbindung zwischen einer Steckmuffe und wenigstens einem Rohrende.

Steckmuffen sind in vielen Ausführungen bekannt und werden beispielsweise in der Haustechnik zum Erstellen von Abwasserrohrleitungen verwendet. Bekannt ist hier insbesondere die Elektroschweissmuffe, die sich zu einer zuverlässigen und dauerhaften Verbindung zweier Rohrenden bewährt hat. Wie die ebenfalls bekannte Verbindung mittels Spiegelschweissung gehört die Verbindung mit der Elektroschweissmuffe zu den zuverlässigsten und dauerhaftesten Verbindungen. Nachteilig ist hier jedoch, dass ein vergleichsweise teures Schweissgerät verwendet werden muss, und ein elektrischer Anschluss notwendig ist. In der Regel muss bei der Verwendung einer Elektroschweissmuffe das Rohrende aussenseitig bearbeitet werden, um eine äussere Kunststoffschicht zu entfernen. Seit vielen Jahren wird auch an der Entwicklung einer sogenannten pyrotechnischen Schweissmuffe gearbeitet, bei welcher die Rohrenden mittels einer Zündung verschweisst werden. In der Praxis hat sich diese Muffe jedoch nicht durchgesetzt.

Im Stand der Technik sind auch zahlreiche Muffen bekannt, bei denen mechanisch eine formschlüssige Verbindung zwischen dem Muffenkörper und den Rohrenden hergestellt wird. Hierbei werden beispielsweise Rückhalteringe oder Krallringe verwendet, die sich in das Rohrende eingraben. Auch sind zahlreiche Schraubmuffen bekannt. Bei diesen Muffen ist jedoch nachteilig, dass das Rohrende bearbeitet werden muss oder dass auf der Aussenseite des Rohrendes Kerben entstehen oder das Rohrende sonstwie verletzt wird. Bei einigen Muffen ist zudem ein hoher Kraftaufwand bei der Montage erforderlich.

Damit eine Steckmuffe in der Haustechnik geeignet ist, ist erforderlich, dass sich auch dann eine zuverlässige und dauerhafte Verbindung ergibt, wenn sie in rauher und schmutziger Umgebung eingesetzt und dabei durch teilweise ungeschultes Personal montiert wird. Wesentlich ist zudem, dass Kunststoffrohre oft zu unrund sind und im Durchmesser grosse Toleranzen aufweisen. Da oft an schwer zugänglichen Stellen montiert werden muss, sind Schraubvorgänge oder andere Manipulationen beim Fügen der Verbindung ungünstig. Weiter wird an eine geeignete Steckmuffe die Forderung gestellt, dass die Auszugskraft vergleichsweise hoch ist, insbesondere über etwa 200 Newton liegt.

Der Erfindung liegt die Aufgabe zugrunde, eine Steckmuffe zu schaffen, welche die oben genannten Nachteile vermeidet und die sich insbesondere in der Haustechnik eignet und die zudem kostengünstig hergestellt werden kann.

Die Aufgabe ist bei einer gattungsgemässen Steckmuffe dadurch gelöst, dass die genannten Mittel ein Spannelement aufweisen, das vor dem Einstecken des Rohrendes in die zylindrische Öffnung der Steckmuffe durch eine Vergrösserung seines Innendurchmessers vorspannbar ist und das nach dem Einstecken des Rohrendes durch freiwerdende Eigenspannung gegen die Aussenseite des Rohrendes spannbar ist.

Die Vergrösserung des Innendurchmessers des Spannelementes ermöglicht ein weitgehend kraftfreies Einstecken des Rohrendes in die Steckmuffe. Die Verbindung der Steckmuffe mit dem Rohrende erfolgt durch ein Freisetzen der Eigenspannung des Spannelementes. Dadurch wird eine Kraft ausgeübt, welche das Spannelement gegen die Aussenseite des Rohrendes spannt und damit das Rohrende in der Steckmuffe mit sehr hoher Auszugskraft verankert.

Nach einer bevorzugten Weiterbildung der Erfindung wird das Spannelement durch Unterdruck vorgespannt. Das Spannelement ist hier beispielsweise ein Schlauch, der in die Steckmuffe eingelegt ist und der mindestens teilweise evakuiert ist oder evakuiert werden kann. Beim Evakuieren des Schlauches wird sein Innendurchmesser vergrössert. Zudem wird in der Wandung des Schlauches eine Spannung erzeugt. Wird das Vakuum im Schlauch aufgehoben, so verkleinert sich der Innendurchmesser des Spannelementes und dieses wird gegen ein in die Steckmuffe eingesetztes Rohrende gespannt. Zugversuche mit einem Abwasserrohr haben ergeben, dass eine Kraft von über 400 Newton aufgewendet werden muss, um das Rohr aus der Muffe herauszuziehen. Eine Bearbeitung der Aussenseite des Rohrendes ist nicht erforderlich. Eine Verletzung der Aussenseite des Rohrendes wird vermieden. Toleranzen im Aussendurchmesser und in der Geometrie des Rohrendes sind nicht kritisch.

Nach einem vorteilhaften Ausführungsbeispiel ist das Spannelement eine Schlingfeder. Vor dem Einführen des Rohrendes ist diese Schlingfeder gespannt. Nach dem Einführen des Rohrendes wird die Schlingfeder entspannt und diese verkleinert damit ihren Innendurchmesser und legt sich um das Rohrende. Auch hier wird freiwerdende Eigenspannung benutzt, um das Spannelement gegen die Aussenseite des Rohrendes zu spannen.

Die erfindungsgemässe Verbindung ist dadurch gekennzeichnet, dass die genannten Mittel ein Spannelement aufweisen, das zum Lösen der Verbindung unter Vergrösserung seines Innendurchmessers vorspannbar ist. Die erfindungsgemässe Verbindung ist somit eine reibschlüssige und lösbare Verbindung. Wesentlich ist auch hier die Veränderung des Innendurchmessers und die Vorspannung bei vergrössertem Innendurchmesser.

Weitere vorteilhafte Merkmale ergeben sich aus den abhängigen Patentansprüchen, der nachfolgenden Beschreibung sowie der Zeichnungen.

Ausführungsbeispiele der Erfindung werden nachfolgend anhand der Zeichnungen näher erläutert. Es zeigen:
- Figur 1: schematisch ein Schnitt durch eine erfindungsgemässe Steckmuffe,
- Figur 2: die Steckmuffe gemäss Figur 1, jedoch mit vorgespanntem Spannelement,
- Figur 3: schematisch ein Schnitt durch eine erfindungsgemässe Verbindung mit einer Steckmuffe gemäss Figur 1,
- Figur 4: schematisch ein Teilschnitt durch eine erfindungsgemässe Steckmuffe gemäss einer Variante,
- Figur 5: schematisch ein Schnitt durch eine Steckmuffe gemäss einer weiteren Variante,
- Figur 6: ein Schnitt gemäss Figur 5, jedoch mit vorgespanntem Spannelement,
- Figur 7: ein Schnitt gemäss Figur 5, wobei ein Rohrende in die Muffe eingesteckt und mit dieser verbunden ist,
- Figur 8: ein Schnitt durch eine erfindungsgemässe Steckmuffe gemäss einer weiteren Variante,
- Figur 9: ein Schnitt gemäss Figur 8, wobei ein Rohrende in die Steckmuffe eingesetzt und mit dieser verbunden ist, und
- Figur 10: ein Schnitt gemäss Figur 9, wobei die hier gezeigte Steckmuffe zwei Rohrenden aufnimmt und miteinander verbindet.

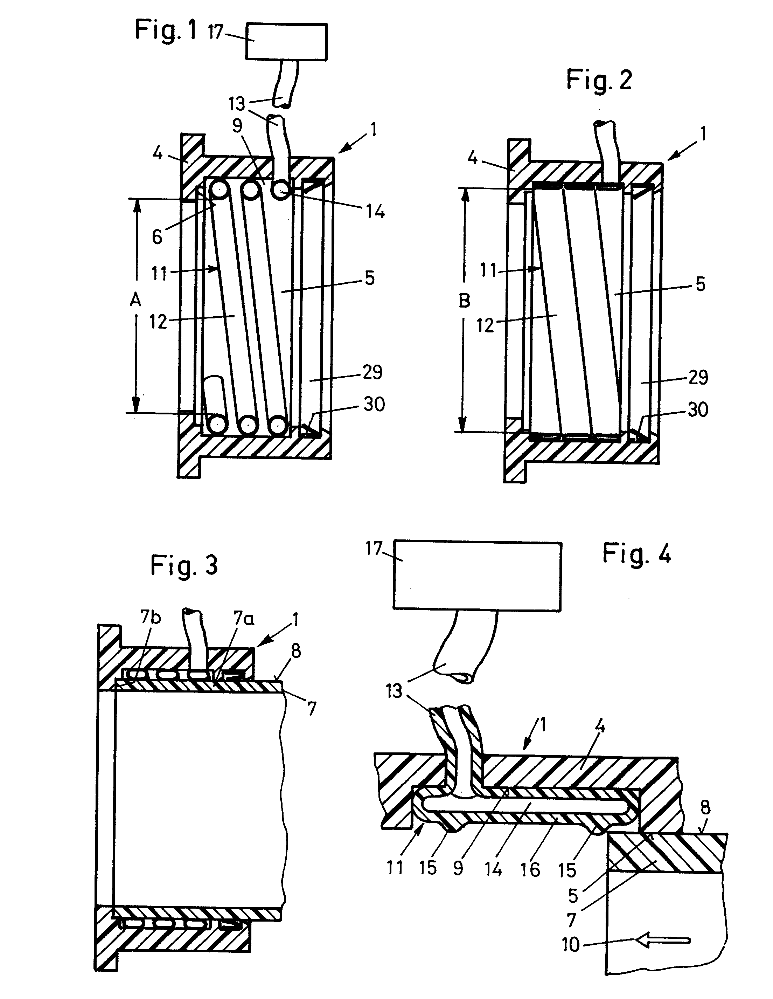

Die Figur 1 zeigt eine Steckmuffe 1, die einen Muffenkörper 4 aufweist, der vorzugsweise aus einem geeigneten Kunststoff hergestellt ist. Der Muffenkörper 4 besitzt eine Öffnung 5, in die das Rohrende 7a eines Rohres 7 einzusetzen ist. Das Rohr 7 ist vorzugsweise ein Kunststoffrohr für eine Abwasserleitung. Typischerweise beträgt der Aussendurchmesser des Rohres 7 etwa 40 mm bis 125 mm.

Innenseitig weist der Muffenkörper 4 eine Nut 9 auf, in die ein schraubenförmiger Schlauch 12 eingelegt ist. Dieser Schlauch 12 ist am Aussenumfang mit dem Muffenkörper 4 verbunden, beispielsweise in die Nut 9 eingeklebt. Denkbar ist auch eine formschlüssige Verbindung des Schlauches 12 mit dem Muffenkörper 4. Ein Ende 13 des Schlauches 12 ist nach aussen geführt und mit einer Vakuumpumpe 17 verbindbar.

In eine weitere Nut 30 ist eine umlaufende Lippendichtung 29 aus einem gummielastischen Werkstoff eingesetzt. Diese Dichtung 29 kann auch auf der anderen Seite des Schlauches 12 und damit zwischen dem Schlauch 12 und einer Schulter 6 angeordnet sein. Diese Schulter 6 bildet einen Anschlag für das Rohr 7, wie die Figur 3 zeigt. Die Dichtung 29 kann jedoch für bestimmte Anwendungen auch weggelassen oder durch andere Dichtungsmittel ersetzt sein.

Der Schlauch 12 bildet einen Ringkanal 14, der über das Ende 13 mit der Vakuumpumpe 17 verbindbar ist. Das andere, hier nicht gezeigte Ende des Schlauches 12 ist luftdicht verschlossen. Der Schlauch 12 muss aus einem möglichst luftdichten Werkstoff hergestellt sein. Um die Luftdichtigkeit zu erhöhen, kann der Schlauch 12 mit einer aufgedampften Schicht versehen oder auch lackiert sein. Zur Herstellung des Schlauches 12 sind insbesondere thermoplastische, spritzbare Elastomere, beispielsweise kautschukähnliche Kunststoffe, insbesondere Nitrilkautschuk, geeignet.

Die Figur 1 zeigt den Schlauch 12 in einem Zustand, bei welchem der Luftdruck in Kanal 14 dem Aussendruck entspricht. Der Querschnitt des Schlauches 12 ist hier vorzugsweise kreiszylindrisch. Wird nun der Druck im Kanal 14 mittels der Vakuumpumpe 17 erniedrigt, so nimmt der Schlauch 12 schliesslich den in Figur 2 gezeigten abgeflachten Querschnitt an. Der in Figur 1 gezeigte Innendurchmesser A wurde hier auf den in Figur 2 gezeigten Innendurchmesser B vergrössert. Der Durchmesser A beträgt beispielsweise 102 mm und der Durchmesser B 111 mm. Die elastische Wandung des Schlauches 12 ist gemäss Figur 2 gespannt und in die Nut 9 zurückgezogen. In die zylindrische Öffnung 5 des Muffenkörpers 4 kann ein Ende 7a eines Rohres 7 ohne Widerstand eingesteckt werden. Wird nun der Kanal 14 wieder mit der Aussenatmosphäre verbunden, so versucht der Schlauch 12 wieder in die in Figur 1 gezeigte ursprüngliche Form zurückzukehren. Da dies nur teilweise möglich ist, legt sich der Schlauch 12 gemäss Figur 3 mit elastischer Spannung an die Aussenseite 8 des Rohrendes 7a an. Der Kanal 14 kann mit der Aussenatmosphäre verbunden werden, indem beispielsweise das Rohrende 13 von der Vakuumpumpe 17 getrennt wird. Möglich ist jedoch auch ein Durchstechen oder Durchschneiden des Schlauches 12 am Ende 13. Aufgrund der Reibung des Schlauches 12 an der Aussenseite 8 lässt sich das Rohr 7 nur noch mit einer hohen Kraft aus der Muffe 1 herausziehen. Diese Auszugskraft kann erhöht werden, indem der Schlauch 12 aus einem Kunststoff mit besonders hohem Reibungskoeffizient hergestellt wird. Der Schlauch 12 kann auch aussenseitig aufgerauht oder mit einer geeigneten Schicht versehen werden.

Die Dichtigkeit der Verbindung wird durch die Lippendichtung 29 gewährleistet. Wie bereits erwähnt, kann die Lippendichtung 29 auch in der Nähe der Stirnseite 7b des Rohres 7 angeordnet sein. Wird der Kanal 14 wieder evakuiert, so ist die Verbindung wieder gelöst und das Rohr 7 kann aus der Muffe 1 herausgezogen werden. Nach dem Lösen kann die Verbindung wieder wie erläutert hergestellt werden. Ein mehrfaches Lösen ist ohne weiteres möglich.

Beim Montieren beispielsweise von Abwasserleitungen ist es wünschbar, dass die Rohre zunächst provisorisch zusammengesteckt werden können. Dazu eignet sich die in Figur 4 gezeigte Weiterbildung der Muffe 1. Bei dieser besitzt der Schlauch 12 eine innere Wandung 16, an der Rippen 15 oder andere Vorsprünge angeformt sind. Ist nun der Schlauch 12 bzw. das Spannelement 11 an die Vakuumpumpe 17 angeschlossen und der Kanal 14 wenigstens teilweise evakuiert, so überragen die Rippen 15 die Nut 9 innenseitig am Muffenkörper 4. Beim Einschieben eines Rohres 7 in die Öffnung 5 liegen die Rippen 15 an der Aussenseite 8 des Rohres 7 an. Dadurch wird das Rohr 7 soweit im Muffenkörper 4 gehalten, dass eine provisorisch erstellte Leitung zusammengehalten ist. Ist die Leitung provisorisch erstellt, so wird, wie oben erwähnt, der Kanal 14 mit der Aussenatmosphäre verbunden.

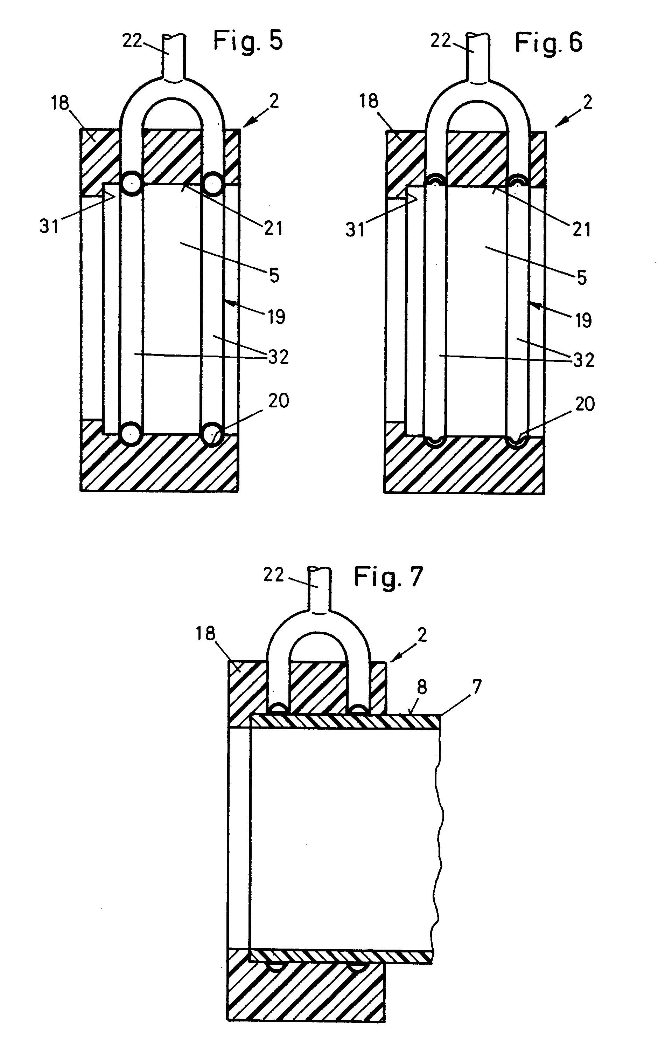

Die Figuren 5 bis 7 zeigen eine Steckmuffe 2, die weitgehend wie die Muffe 1 aufgebaut ist. Der Muffenkörper 18 weist hier ebenfalls eine kreiszylindrische Öffnung 5 auf, in die bis zu einer Schulter 31 ein Rohr 7 einzustecken ist. In eine Innenseite 21 des Muffenkörpers 18 sind zwei im Abstand zueinander angeordnete umlaufende Nuten 20 eingearbeitet. Ein Spannelement 19 besitzt zwei ringförmige Schlauchstücke 32, die jeweils in eine Nut 20 eingelegt sind und die über eine Sammelleitung 22 miteinander verbunden sind. Wird die Sammelleitung 22 mit der Vakuumpumpe 17 verbunden, so lassen sich durch Evakuieren diese Schlauchstükke 19 in die in Figur 6 gezeigte Anordnung bringen. Hierbei wird der Innendurchmesser der beiden Schlauchstücke 32 vergrössert. Sind diese Schlauchstücke 32 wie gezeigt im Durchmesser verkleinert, so kann das Rohr 7 im wesentlichen ohne Widerstand in die Öffnung 5 eingesetzt werden. Wird der Kanal 14 des Spannelementes 19 mit der Aussenatmosphäre verbunden, so legen sich die beiden Schlauchstücke 32 an die Aussenseite 8 des Rohres 7 an. Durch die Reibung der Schlauchstücke 32 und der Aussenseite des Rohres 7 wird dieses mit der Muffe 2 verbunden. Auch hier ist ein wiederholtes Lösen der Verbindung ohne weiteres möglich. Bei dieser Muffe 2 bilden die beiden umlaufenden Schlauchstücke 32 gleichzeitig Dichtungsmittel, welche das Rohr 7 gegenüber dem Muffenkörper abdichten. Denkbar ist eine Ausführung mit weniger oder mehr Schlauchstücken 32. Denkbar ist zudem eine Ausführung, bei welcher die beiden Schlauchstücke 32 unterschiedlich ausgebildet sind. Sie können auch getrennt evakuierbar sein. Ein Schlauchstück kann beispielsweise die Dichtungsfunktion und das andere Schlauchstück 32 die Haltefunktion übernehmen. Die Muffe 2 ist hier mit lediglich einer Öffnung 5 zum Einstecken eines Rohres 7 gezeichnet. Selbstverständlich kann die Muffe 2 auch zwei gegenüberliegende Öffnungen 5 aufweisen, wie dies bei Verbindungsmuffen üblich ist.

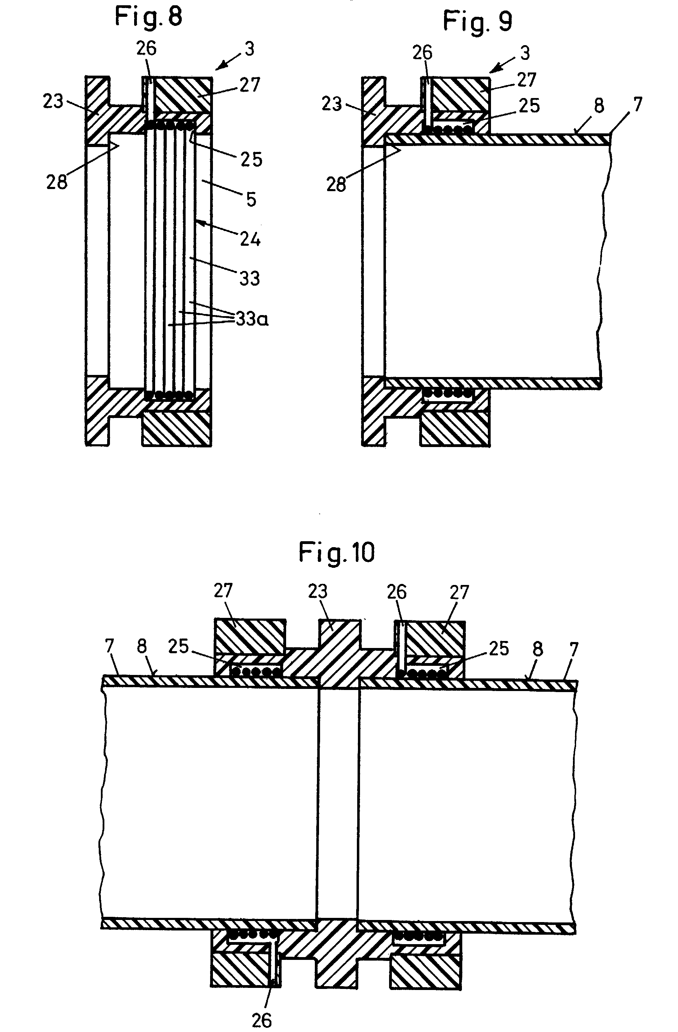

Die Figuren 8 bis 10 zeigen eine Muffe 3 mit einem Spannelement 24, das eine Schlingfeder 33 mit mehreren Windungen 33a aufweist. Diese Schlingfeder 33 ist in eine Nut 25 eines Muffenkörpers 23 eingesetzt. Ein Ende 26 der Schlingfeder 33 ist mit einem Ring 27 verbunden, der auf den Muffenkörper 23 aufgesetzt und mit diesem drehbar ist. Das andere hier nicht gezeigte Ende der Schlingfeder 33 ist fest mit dem Muffenkörper 23 verbunden. Die Figur 8 zeigt die Schlingfeder 33 im vorgespannten Zustand. Der Innendurchmesser der Windungen 33a ist hier grösser als der Innendurchmesser der zylindrischen Öffnung 5. Damit das Spannelement 24 im vorgespannten Zustand gehalten ist, kann der Ring 27 mit hier nicht gezeigten Mitteln am Muffenkörper 3 lösbar fixiert sein. Da die Windungen 33a über die Nut 25 innenseitig nicht vorstehen, kann ein Rohr 7 ohne Widerstand in die Öffnung 5 eingesteckt werden. Um das Rohr 7 mit dem Muffenkörper 23 zu verbinden, wird der Ring 27 gelöst. Infolge der Spannung der Schlingfeder 23 wird der Ring 27 auf dem Muffenkörper 23 gedreht und entsprechend zieht sich die Schlingfeder 33 zusammen, um sich schliesslich an die Aussenseite 8 des Rohres 7 unter Spannung anzulegen. Da das Spannelement 24 mit dem Muffenkörper 23 verbunden ist, kann infolge der Reibung der Schlingfeder 33 an der Aussenseite des Rohres 7 dieses lediglich noch mit sehr hoher Kraft aus der Öffnung herausgezogen werden. Diese Reibung kann durch ein geeignetes Profil der Schlingfeder 33, durch eine Beschichtung oder durch eine Erhöhung der Windungszahl noch erhöht werden. Denkbar ist auch eine Ausführung, bei welcher der Ring 27 in der in Figur 9 gezeigten Position mit hier nicht gezeigten Spannmitteln zur Erhöhung der Anpresskraft bezüglich des Muffenkörpers 23 in Umfangsrichtung gespannt wird. Soll die Verbindung auch flüssigkeitsdicht sein, so kann gemäss Figur 1 der Muffenkörper 23 mit einer weiteren Nut 30 und einer Lippendichtung 29 versehen werden. Denkbar ist auch eine Ausführung, bei welcher eine hier nicht gezeigte Dichtungsmanschette zwischen die Windungen 33a und die Aussenseite des Rohres 8 eingelegt ist. Wesentlich ist auch bei diesem Spannelement 24, dass es durch Vergrösserung seines Innendurchmessers vorspannbar ist und dass es nach dem Einstecken des Rohres 7 durch freiwerdende Eigenspannung gegen die Aussenseite 8 des Rohres 7 spannbar ist. Durch Zurückdrehen des Ringes 27 kann das Spannelement 24 wieder in die in Figur 8 gezeigte Position gebracht und damit die Verbindung gelöst werden. Die Muffe 3 kann gemäss Figur 10 mit zwei Öffnungen 5 zum Einstecken jeweils eines Rohres 7 versehen sein. Die beiden Rohre 7 können jedoch auch unterschiedlich mit dem Muffenkörper 23 verbunden sein. Die eine Verbindung kann beispielsweise eine Schraubverbindung oder eine Schweissverbindung sein.

## Patentansprüche

1. Steckmuffe, insbesondere für Rohre (7) aus Kunststoff, mit einem Muffenkörper (4, 18, 23), der wenigstens eine zylindrische Öffnung (5) zur Aufnahme eines Rohrendes (7a) sowie Mittel (11, 19, 24) zur reibschlüssigen Befestigung des Rohrendes (7a) am Muffenkörper (4, 18, 23) aufweist, dadurch gekennzeichnet, dass die genannten Mittel ein Spannelement (11, 19, 24) aufweisen, das vor dem Einstecken des Rohrendes (7a) in die zylindrische Öffnung (5) der Steckmuffe durch eine Vergrösserung seines Innendurchmessers (A) vorspannbar ist und das nach dem Einstecken des Rohrendes (7a) durch freiwerdende Eigenspannung gegen die Aussenseite (8) des Rohrendes (7a) spannbar ist.

2. Steckmuffe nach Anspruch 1, dadurch gekennzeichnet, dass das Spannelement (11) durch Unterdruck vorspannbar ist.

3. Steckmuffe nach Anspruch 2, dadurch gekennzeichnet, dass das Spannelement (11) einen ringförmigen Kanal (14) oder Hohlraum aufweist, der wenigstens teilweise evakuierbar ist.

4. Steckmuffe nach Anspruch 2 oder 3, dadurch gekennzeichnet, dass das Spannelement (11) wenigstens einen ringförmigen Kanal (14) aufweist, der in einer Nut (9) eines Muffenkörpers (4) angeordnet ist.

5. Steckmuffe nach Anspruch 4, dadurch gekennzeichnet, dass das Spannelement (19) mehrere, insbesondere zwei im Abstand zueinander angeordnete, ringförmige Elemente (32) aufweist, die gemeinsam oder einzeln durch Evakuieren vorspannbar sind.

6. Steckmuffe nach einem der Ansprüche 1 bis 5, dadurch gekennzeichnet, dass das Spannelement (11, 19) in axialer Richtung formschlüssig mit dem Muffenkörper (4) verbunden ist.

7. Steckmuffe nach Anspruch 1, dadurch gekennzeichnet, dass das Spannelement (11, 19) einen Schlauch (12, 32) aufweist, der in der zylindrischen Öffnung (5) eines Muffenkörpers (4, 18) angeordnet ist und der evakuiert oder evakuierbar ist.

8. Steckmuffe nach Anspruch 7, dadurch gekennzeichnet, dass der Schlauch (32) wenigstens ein geschlossen ringförmiges Element aufweist.

9. Steckmuffe nach Anspruch 7, dadurch gekennzeichnet, dass der Schlauch (12) spiralförmig ist.

10. Steckmuffe nach Anspruch 1, dadurch gekennzeichnet, dass das Spannelement (11, 19) wenigstens bereichsweise an einem Muffenkörper (4, 18) angeklebt oder angespritzt ist.

11. Steckmuffe nach Anspruch 1, dadurch gekennzeichnet, dass das Spannelement (24) eine Schlingfeder (33) aufweist.

12. Steckmuffe nach Anspruch 11, dadurch gekennzeichnet, dass die Schlingfeder (33) an einem Ende mit einem Muffenkörper (23) verbunden ist und an einem anderen Ende (26) mit einem drehbaren Ring (27) verbunden ist.

13. Steckmuffe nach Anspruch 11 oder 12, dadurch gekennzeichnet, dass die Schlingfeder (33) mit einem reibungserhöhenden Überzug versehen ist.

14. Steckmuffe nach einem der Ansprüche 11 bis 13, dadurch gekennzeichnet, dass in die zylindrische Öffnung (5) ein Dichtungsmittel (29) eingesetzt ist.

15. Verbindung zwischen einer Steckmuffe (1, 2, 3) und wenigstens einem Rohr (7), das in eine zylindrische Öffnung (5) der Steckmuffe eingesetzt ist, wobei in der zylindrischen Öffnung (5) Mittel angeordnet sind, welche die Steckmuffe reibschlüssig mit dem Rohr verbinden, dadurch gekennzeichnet, dass die genannten Mittel ein Spannelement (11, 19, 24) aufweisen, das zum Lösen der Verbindung unter Vergrösserung seines Innendurchmessers (B) vorspannbar ist.

16. Verbindung nach Anspruch 15, dadurch gekennzeichnet, dass das Spannelement (11, 19, 24) zur erneuten Bildung der Verbindung freiwerdende Eigenspannung gegen die Aussenseite (8) des Rohres (7) spannbar ist.

17. Verbindung nach Anspruch 15 oder 16, dadurch gekennzeichnet, dass das Spannelement (11, 19) wenigstens einen evakuierbaren Ringraum (14) aufweist.

18. Verbindung nach Anspruch 15, dadurch gekennzeichnet, dass das Spannelement (24) eine Schlingfeder (33) aufweist.

19. Verbindung nach einem der Ansprüche 15 bis 18, dadurch gekennzeichnet, dass das Spannelement (11) an einer innenseitigen Wandung (16) Vorsprünge (15) aufweist, welche an die Aussenseite (8) des Rohres (7) angelegt sind.
